**Europäisches Patentamt**

**European Patent Office**

**Office européen des brevets**

(11) Veröffentlichungsnummer: **0 357 587**
**A1**

## (12) EUROPÄISCHE PATENTANMELDUNG

(21) Anmeldenummer: **89890207.7**

(22) Anmeldetag: **04.08.89**

(51) Int. Cl.⁵: **F 25 D 16/00**
**A 23 L 3/34**

(30) Priorität: **04.08.88 AT 1968/88**

(43) Veröffentlichungstag der Anmeldung:
**07.03.90 Patentblatt 90/10**

(84) Benannte Vertragsstaaten: **ES GR**

(71) Anmelder: **Franz Welz Internationale Transporte GmbH**
**Ernest-Thun-Strasse 8**
**A-5021 Salzburg (AT)**

(72) Erfinder: **Wassibauer, Rüdiger**
**A-5412 Puch 372**
**/ (AT)**

**Russ, Werner**
**Palfen 144**
**A-5541 Altenmarkt (AT)**

(74) Vertreter: **Wildhack, Helmut, Dr. Dipl.-Ing. et al**
**Patentanwälte Dipl.-Ing. Peter Boeckmann Dipl.-Ing. Leo**
**Brauneiss Dr. Dipl.-Ing. Helmut Wildhack Strohgasse 10**
**A-1030 Wien (AT)**

(54) **Kühlverfahren und kühlbehälter.**

(57) Die Erfindung betrifft ein Kühlverfahren und einen Kühlbehälter, in den Stickstoff eingespeist wird, der in flüssiger Form in Behältern mit dem Kühlbehälter mitgeführt wird, wobei zur Kühlung der Atmosphäre des Kühlbehälters (1) zumindest ein Kühlaggregat vorgesehen ist. Erfindungsgemäß ist vorgesehen, daß die Atmosphäre über das Kühlaggregat (3) während von einer Steuereinrichtung (13) vorgegebener Zeitabschnitte mit zumindest einem Gebläse (44) umgewälzt wird und zumindest eine Einrichtung (6,7,7') zur Erwärmung des Stickstoffs vor seiner Einspeisung in den Kühlraum (40) des Kühlbehälters (1) vorgesehen ist, mit der der Stickstoff auf eine Temperatur erwärmbar ist, die im wesentlichen der im Kühlraum (40) herrschenden Temperatur entspricht, vorzugsweise nur etwas geringer als diese ist.

Fig. 2

EP 0 357 587 A1

## Beschreibung

### Kühlverfahren und Kühlbehälter

Die Erfindung betrifft einen Kühlbehälter, insbesondere Kühlcontainer zum Transport bzw. Lagerung von Waren, in den insbesondere zur Aufrechterhaltung der Atmosphärenzusammensetzung Stickstoff eingespeist wird, der in flüssiger Form in Behältern mit dem Kühlbehälter mitgeführt wird, wobei zur Kühlung der Atmosphäre des Kühlbehälters zumindest ein Kühlaggregat vorgesehen ist. Ferner betrifft die Erfindung ein Kühlverfahren für Kühlbehälter, insbesondere Kühlcontainer zum Transport bzw. Lagerung von Waren, in die insbesondere zur Aufrechterhaltung der Atmosphärenzusammensetzung Stickstoff eingespeist wird, der in flüssiger Form in Behältern mit den Kühlbehältern mitgeführt wird, wobei die Atmosphäre der Kühlbehälter mit zumindest einem Kühlaggregat gekühlt wird.

Eine Anordnung der genannten Art ist z.B. aus der AU-PS 27731/67 bekannt. Diese Anordnung zeigt jedoch keine ausreichenden Vorkehrungen zur energie- und gassparenden bzw. warenschonenden Kühlung.

Ziel der Erfindung ist es, bei derartigen Kühlbehältern zu erreichen, daß eine möglichst gleichmäßige Atmosphärenzusammensetzung bei möglichst gleichmäßiger Temperatur über einen möglichst langen Zeitraum aufrechterhalten werden kann; insbesondere soll die Lagerzeit bei erhöhter Qualität der im Kühlbehälter gelagerten Waren verlängert werden. Derartige Kühlbehälter sind insbesondere dafür gedacht, als Aufbauten auf LKWs oder Eisenbahnwaggons ausgebildet zu werden, oder auf Schiffe verladen und damit transportiert werden zu können. Derartige Kühlbehälter dienen insbesondere zum Transport von Lebensmitteln, Blumen, Fleisch, Gemüse, Obst, aber auch für Chemikalien, Pharmazeutika und anderen Waren, welche eine bestimmte Atmosphärenzusammensetzung und/oder Temperatur für den Transport benötigten.

Erfindungsgemäß ist ein Kühlbehälter der eingangs genannten Art dadurch gekennzeichnet, daß die Atmosphäre über das Kühlaggregat während von einer Steuereinrichtung vorgegebener Zeitabschnitte mit zumindest einem Gebläse umgewälzt wird und zumindest eine Einrichtung zur Erwärmung des Stickstoffs vor seiner Einspeisung in den Kühlraum des Kühlbehälters vorgesehen ist, mit der der Stickstoff auf eine Temperatur erwärmbar ist, die im wesentlichen der im Kühlraum herrschenden Temperatur entspricht, vorzugsweise nur etwas geringer als diese ist. Ein Verfahren der eingangs genannten Art ist erfindungsgemäß dadurch gekennzeichnet, daß die Atmosphäre während vorgegebener Zeitabschnitte zur Kühlung umgewälzt wird und der Stickstoff vor seiner Einspeisung in den Kühlraum des Kühlbehälters auf eine Temperatur erwärmt wird, die im wesentlichen der im Kühlraum herrschenden Temperatur entspricht, vorzugsweise nur etwas geringer als diese ist.

Das Gebläse für die im Inneren des Behälters erfolgende Umwälzung der Atmosphäre ist ein im Normalfall abgeschaltetes Gebläse, das von der Steuereinrichtung in willkürlich bestimmten oder von bestimmten Parameterwerten im bzw. außerhalb des Behälters, insbesondere der Temperatur und/oder der Feuchtigkeit (relative Luftfeuchte), abhängigen Zeitabständen für eine vorbestimmte oder von den Parameterwerten abhängige Laufzeitdauer einschaltbar ist.

Mit der erfindungsgemäßen Anordnung bzw. dem erfindungsgemäßen Verfahren wird erreicht, daß der zur Einstellung der Atmosphärenzusammensetzung zugeführte Stickstoff mit einer Temperatur in den Kühlraum eingespeist werden kann, die im wesentlichen der Temperatur entspricht, die im Kühlraum herrscht bzw. bis zu etwa 5% geringer ist. Es wird dadurch vermieden, daß durch die Einspeisung des Stickstoffs mit einer zu tiefen Temperatur Ware infolge Kühlschäden zerstört wird. Das Mitführen des Stickstoffs in flüssiger Form in Behältern wird deshalb gewählt, da diese Form der Stickstoffmitführung einen möglichst großen Stickstoffvorrat gewährleistet, verglichen mit einer Speicherung des mitgeführten Stickstoffs in Druckflaschen. Die zur Kühlung benötigte Energie wird von einem z.B. mit Benzin, Dieselöl od.dgl. betriebenen Kühlaggregat geliefert, welches die Atmosphäre des Behälters kühlt, indem diese über das Kühlaggregat umgewälzt wird.

Besonders vorteilhaft und energiesparend ist es, wenn die Einrichtung zur Erwärmung des Stickstoffs zumindest einen außerhalb des Kühlbehälters angeordneten Wärmetauscher umfaßt, der in Wärmekontakt mit der Umgebungsluft steht bzw. von dieser umströmt ist und/oder zumindest einen Wärmetauscher umfaßt, der in der Kältemittelleitung zwischen dem Kompressor und dem Kondensator des Kühlaggregates angeordnet ist oder der mit dem Kältemittelkondensator in Wärmekontakt steht. Damit wird die Energiebilanz des Kühlbehälters verbessert, da Einrichtungen zur Erwärmung des Stickstoffs, z.B. elektrische Heizeinrichtungen, entfallen können; die benötigte Energie zur Erwärmung des Stickstoffs liefert das Kühlaggregat oder die Außenluft. Schließlich werden wesentliche Stickstoffverluste vermieden, indem die Ausblaseleitung der Behälter für den flüssigen Stickstoff in das Innere des Kühlraumes geführt ist. Die üblicherweise an die Umgebung abgegebene Stickstoffmenge wird somit genutzt, wodurch sich eine verlängerte, von Nachfüllstationen für Stickstoff unabhängige Lagerzeit ergibt.

Die folgende Beschreibung, die Zeichnung und die Unteransprüche enthalten vorteilhafte Ausführungsformen der Erfindung.

Im folgenden wird die Erfindung an Hand der Zeichnung beispielsweise näher erläutert.

Es zeigen Fig.1 und 2 schematische Prinzipdarstellungen (teilweise im Vertikalschnitt) eines erfindungsgemäßen Kühlbehälters, Fig.3 bis 7 verschiedene schematische Ausführungsformen von Wärmetauscheranordnungen, Fig.8 und 9 zwei Ausführungsformen von Wärmetauschern und Fig.10 eine schematische Schnittansicht von oben.

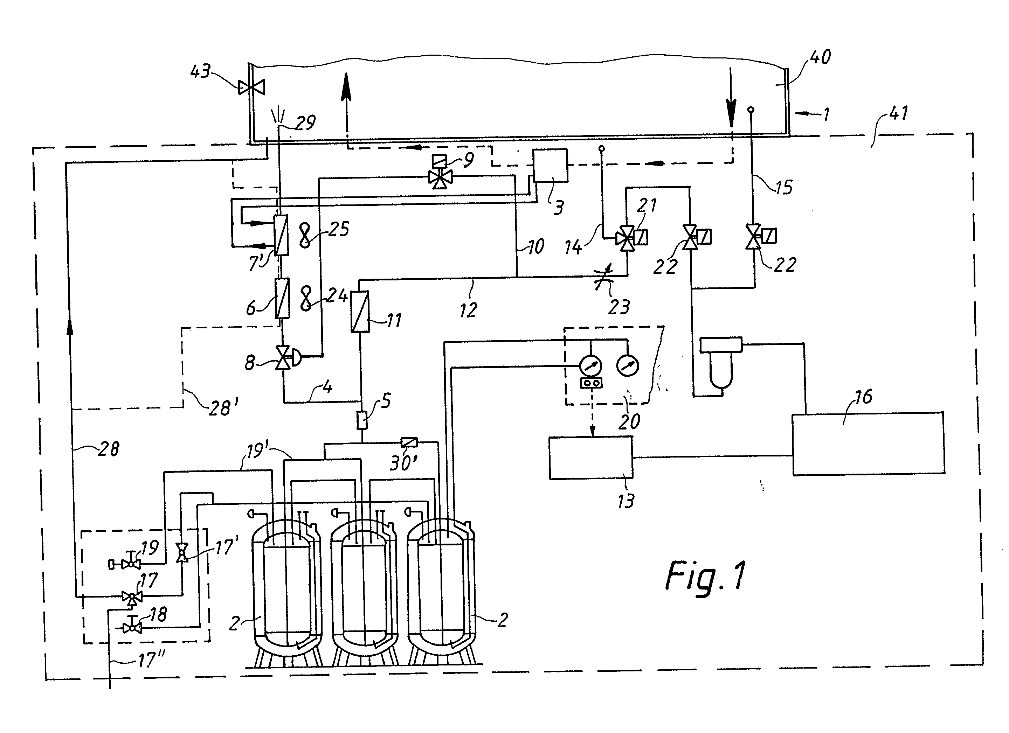

Fig.1 zeigt schematisch einen Kühlbehälter 1, mit einem Geräteraum 41 und einem Kühlraum 40, in den über eine Leitung 4 Stickstoff aus Behältern 2 eingespeist wird, in denen flüssiger Stickstoff enthalten ist. Der flüssige Stickstoff wird bei Lagerbeginn über ein Füllventil 19 und entsprechende Leitungen 19', die unter anderem eine Rückschlagklappe 30' enthalten, in die Behälter 2 eingefüllt. Mit 18 ist ein Lüftungsventil bezeichnet und mit 17 ein Dreiwegemagnetventil, dem ein Überdrucksicherheitsventil 17' vorgeschaltet ist.

Fig.10 zeigt schematisch, daß an den Kühlraum 40 der Geräteraum 41 anschließt bzw. angebaut ist. Im Geräteraum 41 sind die drei Behälter 2 für N2 und ein Behälter 2' für CO2 angeordnet. Getrennt in einer Abteilung ist das Kühlaggregat 3 samt Sensoren angeordnet, über das die Kühlraumatmosphäre umgewälzt wird. In einem oder mehreren weiteren Abteil(en) (Km) sind die Steuereinheit, der Kondensator des Kühlaggregats und weitere Baueinheiten angeordnet. In Fig.1 ist schematisch angedeutet, wie die Rückluft über das Kühlaggregat 3 geführt und als gekühlte Zuluft in den Kühlraum 40 eingespeist wird.

Die Aufrechterhaltung des Druckes der Zusammensetzung und der Temperatur der Atmosphäre im Kühlraum 40 wird von einem Rechner 13 geregelt, der Meßinstrumente 20 bzw. eine Sensorbox 16 abfrägt und alle Ventile, Steuer- und Einstelleinrichtungen für die Behälterparameter steuert bzw. an alle Sensoren, z.B. Gas-, Druck- und Temperatursensoren im Inneren des Behälters, angeschlossen ist. Ferner überwacht der Rechner die Außentemperatur, die Standzeiten usw. und ist somit eingerichtet, den gesamten Kühlablauf von sich aus zu steuern, indem er Zugriff zu sämtlichen Regeleinheiten besitzt. Der zu Kalibrierzwecken der Sensorbox 16 bzw. der Meßeinrichtungen benötigte Stickstoff wird von den Behältern 2 über eine Leitung 12 abgezogen, die einen Wärmetauscher 11 besitzt, in der der Stickstoff durch Wärmekontakt mit der Umgebungsluft erwärmt wird. Der Stickstoff strömt in der Leitung 12 über eine Drossel 23 zu einem Dreiwegeventil 21, welches die Leitung 12 oder die Leitung 14, über welche Umgebungsluft ansaugbar ist, über ein Absperrventil 22 mit der Sensorbox 16 verbindet, welche ihrerseits über ein weiteres Absperrventil 22 über eine Leitung 15 mit der Atmosphäre im Kühlraum 40 verbindbar ist, so daß sie Vergleichsmessungen unter Verwendung von Stickstoff/Außenluft und Kühlraumatmosphäre durchführen kann.

Gleichzeitig dient die Leitung 12 bzw. der in ihr herrschende Druck zur Drucksteuerung eines pneumatischen Ventiles 9 über die Leitung 10, welches pneumatische Ventil 9 ein in der Leitung 4 gelegenes Tieftemperaturventil 8 öffnen, schließen und einregeln kann.

Die Leitung 4 ist in Fig.1 über einen Wärmetauscher 6 zum Wärmeaustausch mit der Umgebungsluft und einen Wärmetauscher 7' geführt, der im Kreislauf 32 des Kältemittels des Kühlaggregates 3 gelegen ist. Mit 32 sind die Kältemittelleitungen angedeutet, die vom Kompressor der Kälteeinrichtung 3 komprimiertes, d.h. warmes Kühlmittel, enthalten. Die Leitung 4 mündet in den Kühlraum 40 des Containers über eine Düse 29. Möglich wäre es auch, die Düse oder eine Drossel oder eine damit vergleichbare Einrichtung bereits außerhalb des Kühlraumes in der Leitung 4, allenfalls auch vor den Wärmetauschern 6 bzw.7', anzuordnen.

Über das Sicherheitsventil 17' und das Gasabblasventil 17, das über die Leitung 17'' mit der Außenluft in Verbindung steht, ist die Leitung 28 in den Kühlraum 40 des Behälters 1 geführt, mit der der stetig in den Behältern 2 verdampfende Stickstoff unter Regelung der Steuereinheit 13 in den Lagerraum 40 eingeleitet werden kann. Ist eine N2-Einleitung in den Kühlraum nicht erforderlich, wird der N2 an die Umgebung über 17'' abgegeben. Die Leitung 28 könnte auch, wie strichliert mit 28' angedeutet, über den Wärmetauscher 6 bzw. den Wärmetauscher 7' geführt sein, um dem durchgeleiteten Stickstoff eine höhere Temperatur zu erteilen. Mit 43 ist ein Überdruckventil für den Kühlraum 1 bezeichnet.

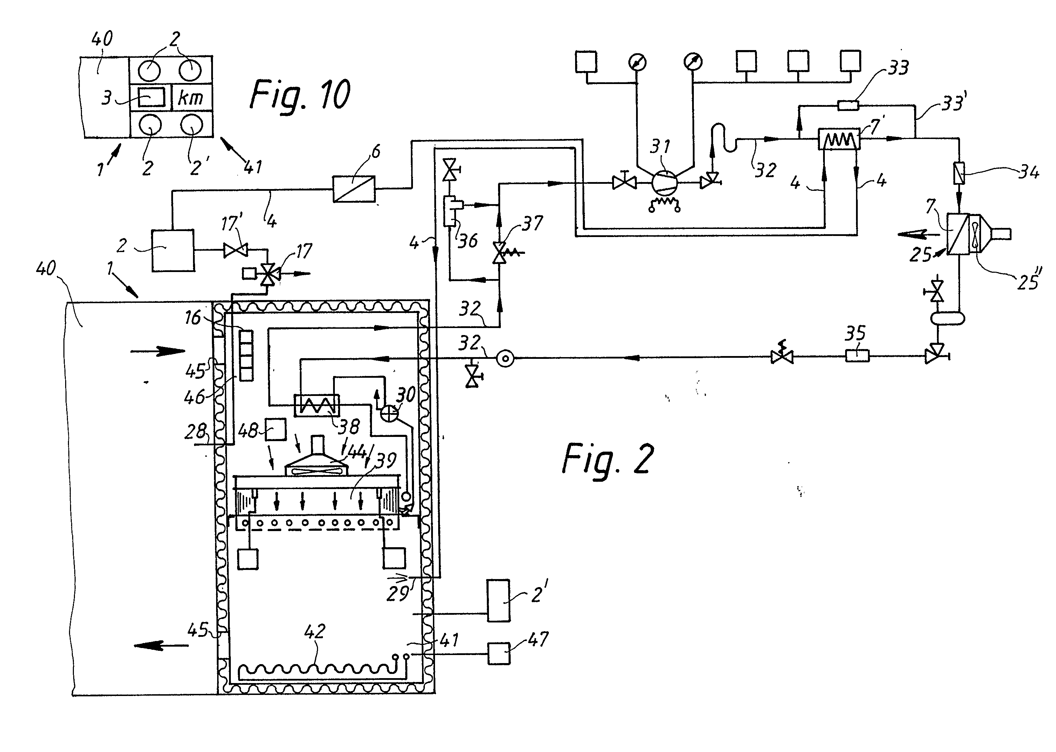

Fig.2 zeigt schematisch einen Container 1, der in den Kühlraum 40, der gegebenenfalls auch mit einer Heizung 42 (z.B. für eine rasche Erwärmung der Waren) versehen ist, und in einen Geräteraum 41, in dem sich (siehe auch Fig.10) das Kühlaggregat 3, die Stickstoffbehälter 2, der CO2-Behälter 2; die Steuereinrichtung 13 und die weiteren technischen Einrichtungen befinden, unterteilt ist. Von den im Geräteraum 41 befindlichen Stickstoffbehältern 2 ist über die Ventile 17,17' die Leitung 28 für den naturgemäß in den Behältern 2 verdampfenden Stickstoff in den Kühlraum 40 und/oder Geräteraum 41 geführt. CO2 wird in den Geräteraum 41 und/oder Kühlraum 40 eingeleitet, die Einleitung kann dabei vor oder nach dem Verdampfer 39 bzw. in den Zuluft- und/oder Rückluftstrom erfolgen. Über die Leitung 4, den Wärmetauscher 6, den Wärmetauscher 7' und über die Drossel bzw. Düse 29 wird Stickstoff mit einer Temperatur, welche im wesentlichen der Temperatur im Kühlraum 40 entspricht, in diesen eingespeist. Die Behälteratmosphäre wird über den Verdampfer 39 des Kühlaggregates 3 mittels eines Verdampfergebläses 44 umgewälzt und über angedeutete Kanäle 45 in den Kühlraum 40 gefördert bzw. von diesem abgezogen. Vorteilhafterweise erfolgt die Umwälzung der Atmosphäre über den Verdampfer 39 des Kühlaggregates 3 von oben nach unten bzw. im wesentlichen senkrecht.

In der Leitung 32 für das Kältemittel ist ein Verdampfungsdruckregler 36 angeordnet, dem ein Bypaßventil 37 parallelgeschaltet ist. Im Strömungsweg folgend ist ein Kompressor 31 angeordnet, von dem erwärmtes, komprimiertes Kühlmittel zum Wärmetauscher 7' gelangt, dem ein Bypaß 33 parallelgeschaltet ist. Im folgenden passiert die Leitung 32 ein Rückschlagventil 34 und den mit dem Kondensator 25 des Kühlaggregates in Wärmekontakt stehenden Wärmetauscher 7, der von einem Kondensatorgebläse 25' mit Umgebungsluft beaufschlagt ist. Über einen Trockner 35 und einen Vorwärmetauscher 38 wird das Kühlmittel über ein Expansionsventil 30 dem Verdampfer 39 zugeführt und im Kreislauf weitergeführt.

Die Anordnung einer Bypaßleitung 33' für den Wärmetauscher 7' ist deshalb erforderlich, da bei Stillstehen des Kompressors 31 der über die Leitung 4 in den Kühlraum 40 eingespeiste Stickstoff eine Erstarrung des Kältemittels in der Leitung 32 bzw. deren Verstopfen bewirken könnte und bei Einsetzen der Arbeit des Kompressors 31 die Leitung 32 bzw. andere Bauteile auf Grund des Überdruckes beschädigt werden können. Demzufolge ist im Bypaß 33' das Überdruckventil 33 angeordnet, das bei einem bestimmten Druck in der Leitung 32 öffnet. Sobald der Kompressor zu arbeiten beginnt, erwärmt das vom Kompressor komprimierte Kältemittel das erstarrte Kältemittel im Wärmetauscher 7', worauf der Durchfluß durch den Wärmetauscher 7 wieder frei wird, worauf das Bypaßventil 33 schließt und die gesamte Kältemittelmenge durch den Wärmetauscher 7' strömt. Entspre chend ist vorgesehen, daß die Bypaßleitung 33' nahe genug am Wärmetauscher 7' vorbeigeführt ist, so daß einerseits diese Leitung nicht einfrieren kann und anderseits von dieser Leitung der Wärmetauscher 7' aufgetaut werden kann.

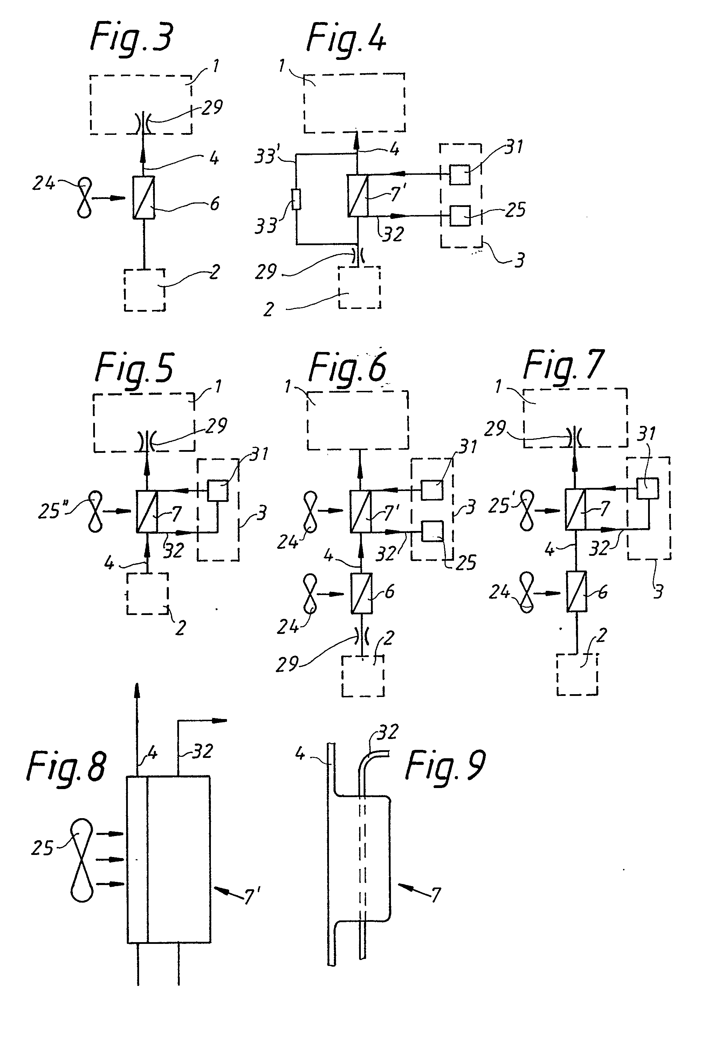

Fig.3 zeigt schematisch eine Einrichtung zur Erwärmung des Stickstoffes, bei der Stickstoff aus dem Stickstoffbehälter 2 in den Kühlraum des Kühlcontainers 1 geleitet wird. Die Leitung 4 ist über einen Wärmetauscher 6 für Wärmekontakt mit der Umgebungsluft geführt, der mit einem Gebläse 24 beaufschlagt werden kann.

Fig.4 zeigt eine Einrichtung mit einem Wärmetauscher 7', in dem ein Wärmetausch zwischen dem vom Kälteaggregat 3 bzw. vom Kompressor 31 über die Leitung 32 zum Kondensator 25 geführten Kältemittel und dem in der Leitung 4 geführten Stickstoff stattfindet. Dem Wärmetauscher 7' ist eine Bypaßleitung 33' mit einem Bypaßventil 33 zugeordnet.

Fig.5 zeigt eine Einrichtung, bei der in der Stickstoffleitung 4 ein Wärmetauscher 7 angeordnet ist, welcher mit dem Kondensator 25 des Kälteaggregates 3 zu einer Baueinheit zusammengefügt ist und mit einem Gebläse, insbesondere dem Kondensatorgebläse 25'', mit Umgebungsluft beaufschlagt ist.

Fig.6 zeigt eine Einrichtung, bei der in der Stickstoffleitung 4 ein Wärmetauscher für Außenluftkontakt 6 angeordnet ist, der gegebenenfalls mit einem Gebläse 24 mit Außenluft beaufschlagt ist. Ferner ist in der Leitung 4 ein Wärmetauscher 7' angeordnet, der im Kältemittelkreislauf zwischen dem Kompressor 31 und dem Kondensator 25 gelegen ist und gegebenenfalls von einem Gebläse 24 mit Umgebungsluft beaufschlagt wird, um den Stickstoff in der Leitung 4 zu erwärmen.

Fig.7 zeigt eine Anordnung, bei der in der Leitung 4 ein von einem Gebläse 24 beaufschlagter Wärmeaustauscher 6 angeordnet ist zum Wärmeaustausch mit Außenluft und in der ferner eine Baueinheit 7 aus einem Wärmetauscher und dem Kondensator 25 angeordnet ist, welche von einem Gebläse 25', insbesondere dem Kondensatorgebläse, beaufschlagt ist.

Fig.8 zeigt eine Anordnung, bei der zwei Wärmetauscher, insbesondere in Form von Lamellenrohren bzw. Rosten oder Platten zu einer Anordnung 7' zusammengefügt sind, die mit einem Gebläse 25' mit Luft durchströmt wird. Alternativ dazu könnte gemäß Fig.9 auch eine Anordnung vorgesehen sein, in der die Kältemittelleitung 32 durch einen Behälter durchgeführt ist, welcher mit Stickstoff aus der Stickstoffleitung 4 durchströmt wird.

Erfindungsgemäß können auch andere Einrichtungen zur Erwärmung des Stickstoffes in der Leitung 4 eingesetzt werden. Wärmetauscher zum Wärmekontakt mit der Außenluft können ebenso wie die Wärmetauscher zum Austausch der Wärme mit dem in der Leitung 32 zirkulierten Kältemittel beliebige Form aufweisen. Ebenso bleibt die Formgebung bzw. der Aufbau der Baueinheit, welche eine Kombination des Wärmetauschers für den Stickstoff mit dem Kondensator 25 des Kältemittelaggregates 3 darstellt, dem Fachmann überlassen. Man wird derartige Wärmetauscher selbstverständlich nach den Gesichtspunkten eines möglichst guten Wärmetausches auslegen.

Bei der vorliegenden Erfindung wird nicht die Kälteenergie des mitgeführten Stickstoffs zur Kühlung ausgenützt, sondern es wird flüssiger Stickstoff eingesetzt, um eine möglichst große Quantität an Stickstoff mitführen zu können. Durch Einregelung der Stickstofftemperatur bzw. Erwärmen des Stickstoffes auf einen Wert, der die Temperatur im Kühlraum 40 um ein Geringes unterschreitet, wird in gewisser Weise auch der Kühleffekt des Stickstoffs bzw. dessen Kälteenergie ausgenutzt, ohne die im Kühlraum 40 gelagerte Ware zu beeinträchtigen. Der Durchsatz des Stickstoffes bzw. des Kältemittels durch die Wärmetauscher und/oder die Leistung der Gebläse 24,25', die Leistung des Kälteaggregates, das Öffnen und Schließen der Einspeiseventile usw. erfolgt unter der Regelung der Steuereinheit 13. Z.B. kann durch das Ventil bzw. die Drossel 29, welche(s) den Durchfluß des Stickstoffs hemmt bzw. steuert, eine Temperaturregelung des eingespeisten Stickstoffes erfolgen, indem er die Wärmetauscher rascher oder langsamer durchquert. Die Drossel 29 regelt den Stickstoffdruck in der Leitung 4 bzw. den Verbrauch und wird durch den Rechner 13 gesteuert. Ebenfalls kann durch Einregelung der Geschwindigkeiten der Gebläse 24 und 25' eine Temperaturanpassung des Stickstoffes an die Temperatur im Kühlraum erreicht werden. Vorteilhafterweise werden die Gebläse 24 und 25' so laufen gelassen, daß bei kombinierten Einheiten von Wärmetauscher und Kondensator oder Wärmetauscher und Kältemittelleitung 32 ein Stocken bzw. Festwerden des Kältemittels 32 vermieden wird.

Bei der Einspeisung des Stickstoffes über die Leitung 28 können in dieser Leitung die gleichen Vorkehrungen bezüglich Wärmetauscher getroffen werden, wie sie in der Leitung 4 vorgesehen sind. Die Leitung 28 kann ebenso wie die Leitung 4 über externe bzw. dem Kondensator 25 zugeordnete bzw. in der Kältemittelleitung 32 angeordnete Wärmetauscher geführt werden.

Es wurde in der Praxis festgestellt, daß durch die aus den Behältern 2 verdampfende Stickstoffmenge, welche erfindungsgemäß zur Einstellung der Atmosphäre verwendet wurde bzw. in den Kühlraum 40 eingeleitet wurde, die aber auch in den Raum 41 und von dort in den Kühlraum eingeleitet werden kann, die durch Leckage des Behälters 1 entstehenden Stickstoffverluste weitgehend ausgeglichen werden konnten.

Bei der Erstbefüllung wird derart vorgegangen, daß der Container mit normaler Atmosphäre gefüllt vorgekühlt wird, daß sodann die Waren eingelagert werden und daß daraufhin ein Begasen mit Stickstoff bzw. das Einstellen der Containeratmosphäre und ein Abkühlen vorgenommen wird, welcher Vorgang etwa 6 Stunden dauert.

Der Rechner 13 bzw. die Sensorbox 16 messen u.a. den Gehalt an Stickstoff, $CO_2$, Argon, Äthylen usw. im Kühlraum. Mit 46 sind Sensoren für $O_2$, $CO_2$, die Raumfeuchte $R_T$ usw. bezeichnet, die im Kühlraum 40 bzw. im Geräteraum 41 im Strömungsweg, insbesondere stromauf vom Verdampfer bzw. vom Verdampfergebläse 44 bzw. vorteilhaft vor dem Austritt der Rückluft gelegen sein können.

Die Einstellung der Zusammensetzung der Atmosphäre des erfindungsgemäßen Kühlbehälters erfolgt vorzugsweise derart, daß der $N_2$-Gehalt der Atmosphäre mit dem mitgeführten $N_2$ eingeregelt wird, wobei überschüssiger Sauerstoff vorzugsweise mit $N_2$ ausgespült wird. Der $CO_2$-Gehalt wird vorzugweise mit Hilfe eines $CO_2$-Scrubbes bzw. Molekularsiebes 48 bzw. durch Zufuhr von $CO_2$ aus dem mitgeführten Behälter 2′ eingestellt. Ein zu geringer $O_2$-Gehalt wird durch Zufuhr von Außenluft mit einer Zufuhreinrichtung 47, einer Pumpe, ausgeglichen. Weitere einzuregelnde Atmosphärenbestandteile (Äthylen, Argon) können durch Spülung mit $N_2$ oder durch Zufuhr aus eigenen Behältern eingeregelt werden. Sämtliche Einstell- und Regelungsvorgänge werden von der Steuereinrichtung vorgenommen.

Nicht in der Zeichnung dargestellt ist eine Steuereinheit für die gegebenenfalls vorgesehene Einregelung der Erwärmungseinrichtungen für den Stickstoff. Erfindungsgemäß ist vorgesehen, daß in der Bypaßleitung ein bei einem vorgegebenen Druck in der Kältemittelleitung öffnendes Ventil vorgesehen ist. Es kann ferner vorgesehen sein, daß die Steuereinheit die Luftzufuhr zu den Wärmetauschern z.B. mittels verstellbaren Luftjalousien, Drehzahlsteuereinrichtungen für die Gebläse od.dgl., regelt. Mit der Steuereinheit kann das Ausmaß der Erwärmung des $N_2$ an die Kühlparameter bzw. die Kühlverhältnisse angepaßt werden und die Menge und/oder der Druck des einzuspeisenden $N_2$ eingeregelt werden.

**Patentansprüche**

1. Kühlbehälter, insbesondere Kühlcontainer zum Transport bzw. Lagerung von Waren, in den insbesondere zur Aufrechterhaltung der Atmosphärenzusammensetzung Stickstoff eingespeist wird, der in flüssiger Form in Behältern mit dem Kühlbehälter mitgeführt wird, wobei zur Kühlung der Atmosphäre des Kühlbehälters (1) zumindest ein Kühlaggregat vorgesehen ist, dadurch gekennzeichnet, daß die Atmosphäre über das Kühlaggregat (3) während von einer Steuereinrichtung (13) vorgegebener Zeitabschnitte mit zumindest einem Gebläse (44) umgewälzt wird und zumindest eine Einrichtung (6,7,7′) zur Erwärmung des Stickstoffs vor seiner Einspeisung in den Kühlraum (4) des Kühlbehälters (1) vorgesehen ist, mit der der Stickstoff auf eine Temperatur erwärmbar ist, die im wesentlichen der im Kühlraum (40) herrschenden Temperatur entspricht, vorzugsweise nur etwas geringer als diese ist.

2. Behälter nach Anspruch 1, dadurch gekennzeichnet, daß die Einrichtung zur Erwärmung des Stickstoffs von zumindest einem außerhalb des Kühlraumes (40) gelegenen, in der Stickstoffleitung (4) vom Stickstoffbehälter (2) zum Kühlraum (40) angeordneten Wärmetauscher (6,7,7′) gebildet ist.

3. Behälter nach Anspruch 1 oder 2, dadurch gekennzeichnet, daß die Einrichtung zur Erwärmung des Stickstoffs zumindest einen außerhalb des Kühlraumes (40) angeordneten Wärmetauscher (6) umfaßt, der in Wärmekontakt mit der Umgebungsluft steht bzw. von dieser umströmt ist und/oder zumindest einen Wärmetauscher (7′) umfaßt, der in der Kältemittelleitung (32) zwischen dem Kompressor (31) und dem Kondensator (25) des Kühlaggregates (3) angeordnet ist und/oder einen Wärmetauscher (7) umfaßt, der in der Kältemittelleitung (32) gelegen ist und mit dem Kondensator (25) in Wärmekontakt steht.

4. Behälter nach einem der Ansprüche 1 bis 3, dadurch gekennzeichnet, daß der Wärmetauscher (6) für den Wärmetausch mit der Umgebungsluft dem Wärmetauscher (7,7′) für den Wärmeaustausch mit dem Kältemittel in der Kältemittelleitung (32) vorgeschaltet ist.

5. Behälter nach einem der Ansprüche 1 bis 4, dadurch gekennzeichnet, daß der Abschnitt der Kältemittelleitung (32), der in Wärmeübertragungskontakt mit der Leitung (4) für den Stickstoff steht bzw. der vom Kältemittel und dem zu erwärmenden Stickstoff durchströmte Wärmetauscher (7′) von einer Bypaßleitung (33′) überbrückt ist.

6. Behälter nach Anspruch 5, dadurch gekennzeichnet, daß in der Bypaßleitung (33′) ein bei einem vorgegebenen Druck in der Kältemittelleitung (32) öffnendes Ventil (33) vorgesehen ist.

7. Behälter nach einem der Ansprüche 1 bis 6, dadurch gekennzeichnet, daß die Einrichtung (6,7,7′) zur Erwärmung des Stickstoffs eine vom Stickstoff durchströmte Austauschereinheit, z.B. ein Lamellenrohr, umfaßt, die in Wärmekontakt mit einer vom Kühlmittel zwischen Kompressor (31) und Kondensator (25) des Kühlaggregates (3) durchströmten Austauschereinheit, z.B. ein Lamellenrohr, steht bzw. mit dieser zu einer Baueinheit zusammengefaßt ist.

8. Behälter nach einem der Ansprüche 1 bis 7, dadurch gekennzeichnet, daß der Kondensator (25) für das Kältemittel mit einem Wärmetauscher in der Stickstoffleitung (4) zu einer Einheit (7') zusammengefaßt ist.

9. Behälter nach einem der Ansprüche 1 bis 8, dadurch gekennzeichnet, daß die Wärmetauscher (6,7,7') bzw. die in Wärmekontakt stehenden Einheiten von Gebläsen (24,25') bzw. von dem Kondensatorgebläse (25") mit Umgebungsluft beaufschlagt bzw. umströmt werden.

10. Behälter nach einem der Ansprüche 1 bis 9, dadurch gekennzeichnet, daß in der Einspeiseleitung (4) für den erwärmten Stickstoff in das Innere des Kühlraumes (40) zumindest eine, gegebenenfalls regelbare, Drosseleinrichtung (29), z.B. eine Düse, ein regulierbares Ventil od. dgl., vorzugsweise im Endbereich der Leitung (4) und/oder vor den Einrichtungen (6,7,7') zur Erwärmung des Stickstoffs vorgesehen ist.

11. Behälter nach einem der Ansprüche 1 bis 10, dadurch gekennzeichnet, daß der Stickstoffbehälter (2) eine Lüftungsleitung bzw. eine Ausblaseleitung (28) aufweist, die in das Innere des Kühlraumes (40) geführt ist.

12. Behälter nach Anspruch 11, dadurch gekennzeichnet, daß in der, gegebenenfalls ein Sicherheitsventil (17') enthaltenden, Ausblaseleitung (28), insbesondere dem Sicherheitsventil (17') nachgeordnet, ein Dreiwegeventil (17) angeordnet ist, mit dem diese an die Umgebung öffenbar ist.

13. Behälter nach Anspruch 11 oder 12, dadurch gekennzeichnet, daß im Kühlraum (40) ein auf einen bestimmten Druck einregelbares Überdruckventil (43) angeordnet ist.

14. Behälter nach einem der Ansprüche 1 bis 13, dadurch gekennzeichnet, daß in der von dem Stickstoffbehälter (2) in den Kühlraum (40) führende Leitung (28) zumindest eine Heizeinrichtung für den Stickstoff angeordnet ist oder daß in dieser Leitung (28) ein Wärmetauscher zum Wärme kontakt mit der Umgebungsluft angeordnet ist und/oder daß in dieser Leitung (28) ein Wärmetauscher zum Wärmeaustausch mit dem Kältemittel des Kühlaggregates (3) zwischen dem Kompressor (31) und dem Kondensator (25) angeordnet ist.

15. Behälter nach einem der Ansprüche 1 bis 14, dadurch gekennzeichnet, daß das Gebläse (44) für die im Inneren des Behälters (1) erfolgende Umwälzung der Atmosphäre ein im Normalfall abgeschaltetes Gebläse ist, das von der Steuereinrichtung (13) in willkürlich bestimmten oder von bestimmten Parameterwerten im bzw. außerhalb des Behälters (1), insbesondere der Temperatur und/oder der Feuchtigkeit (relativen Luftfeuchte), abhängigen Zeitabständen für eine vorbestimmte oder von den Parameterwerten abhängige Laufzeitdauer einschaltbar ist.

16. Behälter nach einem der Ansprüche 1 bis 15, dadurch gekennzeichnet, daß die Einrichtung(en) (6,7,7') zur Erwärmung des Stickstoffes von einer Steuereinheit, gegebenenfalls der Steuereinrichtung (13), im Hinblick auf die Einstellung der Temperatur und/oder die durchgelassene Menge des zu erwärmenden einzuspeisenden Stickstoffes, gesteuert ist (sind).

17. Behälter nach Anspruch 16, dadurch gekennzeichnet, daß die Steuereinheit verstellbare Jalousien für den Ventilatorluftstrom, und/oder Regeleinrichtungen, z.B. Drosseln, für den einzuspeisenden N2 steuert.

18. Behälter nach einem der Ansprüche 1 bis 17, dadurch gekennzeichnet, daß die Steuereinheit die Luftzufuhr zu den Wärmetauschern (6,7,7'), z.B. mittels verstellbarer Luftjalousien, Drehzahlsteuereinrichtungen für die Gebläse (24,25',25") od.dgl., regelt.

19. Behälter nach einem der Ansprüche 1 bis 18, dadurch gekennzeichnet, daß die Steuereinheit die Drosseleinrichtung (29) regelt.

20. Kühlverfahren für Kühlbehälter, insbesondere Kühlcontainer zum Transport bzw. Lagerung von Waren, in die insbesondere zur Aufrechterhaltung der Atmosphärenzusammensetzung Stickstoff eingespeist wird, der in flüssiger Form in Behältern mit den Kühlbehältern mitgeführt wird, wobei die Atmosphäre der Kühlbehälter (1) mit zumindest einem Kühlaggregat gekühlt wird, dadurch gekennzeichnet, daß die Atmosphäre während vorgegebener Zeitabschnitte zur Kühlung umgewälzt wird und der Stickstoff vor seiner Einspeisung in den Kühlraum (40) des Kühlbehälters (1) auf eine Temperatur erwärmt wird, die im wesentlichen der im Kühlraum (40) herrschenden Temperatur entspricht, vorzugsweise nur etwas geringer als diese ist.

21. Verfahren nach Anspruch 20, dadurch gekennzeichnet, daß der Stickstoff auf seinem Weg vom Stickstoffbehälter (2) zum Kühlraum (40) gekühlt wird.

22. Verfahren nach Anspruch 20 oder 21, dadurch gekennzeichnet, daß der Stickstoff durch Wärmekontakt mit der Umgebungsluft und/oder mit der über den Kompressor (31) und/oder den Kondensator (25) des Kühlaggregates (3) geführten Luft erwärmt wird.

23. Verfahren nach einem der Ansprüche 20 bis 22, dadurch gekennzeichnet, daß der Druck des in den Kühlraum (40) eingespeisten Stickstoffes an den Innendruck im Kühlraum (40) angepaßt wird.

24. Verfahren nach einem der Ansprüche 20 bis 23, dadurch gekennzeichnet, daß die Temperatur des zugeführten Stickstoffes um bis zu 5% geringer ist als die Temperatur im Kühlraum (40).

*Fig.1*

EP 0 357 587 A1

Fig. 10

Fig. 2

EP 0 357 587 A1

Fig.3  Fig.4  Fig.5  Fig.6  Fig.7  Fig.8  Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 224 469 (FRANZ WELZ) * Seite 6, Zeile 10 - Seite 11, Zeile 26; Figur * --- | 1,2,20 | F 25 D 16/00 A 23 L 3/34 |
| Y | US-A-3 487 769 (DIXON) * Spalte 10, Zeile 10 - Spalte 11, Zeile 17; Figuren 9,10 * | 1,2,20 | |
| A | | 3,10-12 ,22,23 | |
| A | EP-A-0 235 119 (FRANZ WELZ) * Seite 6, Zeile 31 - Seite 12, Zeile 30; Figur * --- | 1,20 | |
| A | EP-A-0 136 042 (SHIPPING CORP. OF NEW ZEALAND) * Seite 26, Zeile 2 - Seite 29, Zeile 19; Figuren 1-10 * --- | 1,20 | |
| A | FR-A-2 330 608 (SERMAF) * Seite 3, Zeile 3 - Seite 7, Zeile 14; Figuren 1-5 * --- | 1,20 | RECHERCHIERTE SACHGEBIETE (Int. Cl.5) |
| A | US-A-3 239 360 (DIXON) --- | | F 25 D A 23 L A 23 B |
| A | EP-A-0 126 996 (MESSER GRIESHEIM) --- | | |
| A | DE-A-1 954 914 (BATTELLE MEMORIAL INSTITUTE) --- | | |
| A | DE-A-1 601 874 (DEUTSCHE WAGGON- UND MACHINENFABRIKEN) ----- | | |

Der vorliegende Recherchenbericht wurde für alle Patentansprüche erstellt

| Recherchenort | Abschlußdatum der Recherche | Prüfer |
|---|---|---|
| DEN HAAG | 20-11-1989 | BOETS A.F.J. |